# EUROPÄISCHE PATENTANMELDUNG

(11) **EP 1 914 452 A2**
(43) Veröffentlichungstag der Anmeldung: **23.04.2008**
(21) Anmeldenummer: 07019430.3
(22) Anmeldetag: 04.10.2007
(51) Int. Cl.: F16H 57/04

(54) **Drehdurchführung, insbesondere für den Antriebsstrang eines Fahrzeugs**

(30) Priorität: 17.10.2006 DE 102006048885
(71) Anmelder: ZF Friedrichshafen AG, 88038 Friedrichshafen (DE)
(72) Erfinder: Kühner, Michael, 97523 Schwanfeld (DE); Carlson, Cora, 97456 Hambach (DE); Orlamünder, Andreas, 97453 Schonungen (DE); Esterl, Roman, 60596 Frankfurt (DE); Dögel, Thomas, 97688 Bad Kissingen (DE)

(57) **Zusammenfassung**

Drehdurchführung, insbesondere für den Antriebsstrang eines Fahrzeugs, umfasst eine mit einer mit Fluid zu speisenden Baugruppe (14, 22) zur gemeinsamen Drehung um eine Drehachse (A) zu verbindende Rotoranordnung (28), eine die Rotoranordnung (28) umgebende und gegen Drehung um die Drehachse (A) festzulegende Statoranordnung (30), in der Statoranordnung (30) wenigstens einen ersten Fluidkanal (34), in der Rotoranordnung (28) in Zuordnung zu jedem ersten Fluidkanal (34) wenigstens einen zweiten Fluidkanal (36), eine erste Dichtungsanordnung (40), die an beiden Seiten bezüglich des wenigstens einen ersten Fluidkanals (34) und des diesem zugeordneten wenigstens einen zweiten Fluidkanals (36) jeweils ein erstes Dichtungselement (42, 44) umfasst, das an der Rotoranordnung (28) und an der Statoranordnung (30) dichtend anliegt, eine zweite Dichtungsanordnung (46), die an den von dem wenigstens einen ersten Fluidkanal (34) und dem diesem zugeordneten wenigstens einen zweiten Fluidkanal (36)abgewandten Seiten der ersten Dichtungselemente (42, 44) jeweils ein zweites Dichtungselement (48, 50) umfasst, das an der Rotoranordnung (28) und an der Statoranordnung (30) dichtend anliegt, eine Leckagekanalanordnung (56), die in der Statoranordnung (30) oder/und der Rotoranordnung (28) aus den jeweils zwischen einem ersten Dichtungselement (42, 44) und einem zweiten Dichtungselement (48, 50) gebildeten Raumbereichen (52, 54) wegführende Leckagekanäle (58, 60) umfasst.

## Beschreibung

Die vorliegende Erfindung betrifft eine Drehdurchführung, wie sie insbesondere im Antriebsstrang eines Fahrzeugs eingesetzt werden kann, um eine mit Fluid zu speisende, im Drehbetrieb um eine Drehachse rotierende Baugruppe mit Fluid zu speisen.

Aus der nachveröffentlichten deutschen Patentanmeldung 10 2005 058 531 ist ein Torsionsschwingungsdämpfer bekannt, bei welchem eine zwischen einer Primärseite und einer Sekundärseite wirkende Dämpfungseinrichtung nach Art einer Gasdruckfeder aufgebaut ist, also eine Dämpfungseigenschaft unter Ausnutzung der Kompressibilität eines gasförmigen Mediums bereitstellt. Um die Dämpfungscharakteristik beeinflussen zu können, kann der Druck des gasförmigen Mediums verändert werden. Um dies zu erlangen, wird über eine Drehdurchführung ein Druckfluid, im Allgemeinen eine Flüssigkeit, in den Torsionsschwingungsdämpfer eingeleitet, um entsprechend den Druck des gasförmigen Mediums zu beeinflussen. Somit wird es möglich, die Kennlinie dieses Torsionsschwingungsdämpfers an verschiedene Betriebszustände anzupassen.

Aus der DE 100 34 730 A1 ist eine so genannte nasslaufende Doppelkupplung bekannt, bei welcher über zwei zueinander radial gestaffelte Lamellengruppen ein Drehmoment von einem Kupplungseingangsbereich wahlweise auf eine von zwei zueinander koaxial angeordnete Abtriebswellen übertragen werden kann. Die Ansteuerung der beiden Kupplungsbereiche erfolgt durch ein Druckfluid, das auf Grund der Tatsache, dass die Kupplung ein allgemein rotierendes System ist, über eine Drehdurchführung eingeleitet wird.

Auch bei dem aus der DE 44 23 640 A1 bekannten hydrodynamischen Drehmomentwandler ist eine in Form einer Überbrückungskupplung aufgebaute Baugruppe vorhanden, die durch Zuführung eines Druckfluids angesteuert wird. Da auch dieser hydrodynamische Drehmomentwandler ein allgemein rotierendes System darstellt, besteht auch hier die Notwendigkeit, über eine Drehdurchführung das Druckfluid von der im Allgemeinen nicht rotierenden Fluidquelle aufzunehmen und in denjenigen Bereich weiterzuspeisen, in welchem die Ansteuerung der Überbrückungskupplung erfolgt.

Es ist die Aufgabe der vorliegenden Erfindung, eine Drehdurchführung, wie sie beispielsweise im Antriebsstrang eines Fahrzeugs in verschiedenen Bereichen eingesetzt werden kann, vorzusehen, welche bei hoher Betriebssicherheit die Zuführung von unter hohem Druck stehendem Druckfluid mit vergleichsweise hohem Volumenstrom ermöglicht.

Erfindungsgemäß wird diese Aufgabe gelöst durch eine Drehdurchführung, insbesondere für den Antriebsstrang eines Fahrzeugs, umfassend eine mit einer mit Fluid zu speisenden Baugruppe zur gemeinsamen Drehung um eine Drehachse zu verbindende Rotoranordnung, eine die Rotoranordnung umgebende und gegen Drehung um die Drehachse festzulegende Statoranordnung, in der Statoranordnung wenigstens einen ersten Fluidkanal, in der Rotoranordnung in Zuordnung zu jedem ersten Fluidkanal wenigstens einen zweiten Fluidkanal, eine erste Dichtungsanordnung, die an beiden Seiten bezüglich des wenigstens einen ersten Fluidkanals und des diesem zugeordneten wenigstens einen zweiten Fluidkanals jeweils ein erstes Dichtungselement umfasst, das an der Rotoranordnung und an der Statoranordnung dichtend anliegt, eine zweite Dichtungsanordnung, die an den von dem wenigstens einen ersten Fluidkanal und dem diesem zugeordneten wenigstens einen zweiten Fluidkanal abgewandten Seiten der ersten Dichtungselemente jeweils ein zweites Dichtungselement umfasst, das an der Rotoranordnung und an der Statoranordnung dichtend anliegt, eine Leckagekanalanordnung, die in der Statoranordnung oder/und der Rotoranordnung aus den jeweils zwischen einem ersten Dichtungselement und einem zweiten Dichtungselement gebildeten Raumbereichen wegführende Leckagekanäle umfasst.

Durch den Aufbau der erfindungsgemäßen Drehdurchführung mit zwei zueinander bezüglich der gegen Fluidaustritt abzudichtenden Fluidkanäle gestaffelt liegenden Dichtungsanordnungen besteht eine hohe Sicherheit gegen den Austritt von Druckfluid auch dann, wenn mit vergleichsweise hohem Druck gearbeitet wird. Da weiterhin zwischen den beiden Dichtungsanordnungen bzw. den jeweiligen Dichtungselementen derselben Raumbereiche vorhanden sind, aus welchen über jeweilige Leckagekanäle der Leckagekanalanordnung Fluid abgeleitet werden kann, also Fluid, das die erste Dichtungsanordnung überwunden hat, abgeführt werden kann, kann dafür gesorgt werden, dass diese Raumbereiche im Wesentlichen drucklos gehalten werden, so dass die zweite Dichtungsanordnung unter nahezu druckfreien Zuständen bezüglich des Fluids arbeitet und somit praktisch keine Möglichkeit für das Fluid besteht, auch über diese zweite Dichtungsanordnung hinweg zu strömen.

Um in einfacher Art und Weise die zur Aufnahme von Leckagefluid erforderlichen Raumbereiche bereitstellen zu können, wird vorgeschlagen, dass bei wenigstens einem Paar aus erstem Dichtungselement und zweitem Dichtungselement die beiden Dichtungselemente axial in Abstand zueinander angeordnet sind. Weiterhin ist es dabei vorteilhaft, wenn bei wenigstens einem Paar aus erstem Dichtungselement und zweitem Dichtungselement die beiden Dichtungselemente auf näherungsweise gleichem radialen Niveau liegen. Alternativ ist es möglich, dass bei wenigstens einem Paar aus erstem Dichtungselement und zweitem Dichtungselement die beiden Dichtungselemente auf unterschiedlichem radialen Niveau liegen.

Um eine definierte Positionierung der Rotoranordnung und der Statoranordnung bezüglich einander vorsehen zu können; wird weiter vorgeschlagen, dass in wenigstens einem Raumbereich zwischen zwei Dichtungselementen eines Paares aus erstem Dichtungselement und zweitem Dichtungselement ein die Rotoranordnung bezüglich der Statoranordnung abstützendes Lager angeordnet ist. Dabei kann eine in axialer Richtung sehr kompakt bauende Ausgestaltung dadurch realisiert werden, dass das radial weiter außen liegende der Dichtungselemente das in dem Raumbereich zwischen den beiden Dichtungselementen angeordnete Lager radial außen umgibt.

In der Statoranordnung können bei einer besonders vorteilhaften Ausgestaltungsform wenigstens zwei erste Fluidkanäle vorgesehen sein. Um auch diese gegen gegenseitigen Fluidaustausch zu sichern und somit dafür sorgen zu können, dass in den wenigstens zwei ersten Fluidkanälen und den zugeordneten zweiten Fluidkanälen mit unterschiedlichen Drücken gearbeitet werden kann, wird weiter vorgeschlagen, dass jedem ersten Fluidkanal und dem diesem zugeordneten wenigstens einen zweiten Fluidkanal in der Rotoranordnung eine erste Dichtungsanordnung zugeordnet ist, und dass zwischen zwei ersten Dichtungselementen von verschiedenen ersten Fluidkanälen zugeordneten ersten Dichtungsanordnungen ein Zwischenraum gebildet ist und die Leckagekanalanordnung einen aus diesem Zwischenraum wegführenden Leckagekanal umfasst.

Wenn mit einer einzigen Drehdurchführung zwei mit Druck zu speisende Baugruppen eines Antriebsstrangs versorgt werden sollen, wobei diese beiden Baugruppen im Allgemeinen dann auch axial versetzt zueinander liegen, wird vorgeschlagen, dass die den verschiedenen ersten Fluidkanälen zugeordneten zweiten Fluidkanäle in der Rotoranordnung voneinander getrennt sind und sich in entgegengesetzten axialen Richtungen erstrecken. Dies bedeutet also, dass die verschiedenen ersten Fluidkanäle zugeordneten zweiten Fluidkanäle in der Rotoranordnung das Fluid in den beiden entgegengesetzten Längsrichtungen leiten können, so dass jeweils die an die beiden axialen Enden der Rotoranordnungen dann anschließenden Baugruppen in einfacher Art und Weise gespeist werden können.

Bei einer alternativen Ausgestaltungsform ist es möglich, dass die verschiedenen ersten Fluidkanälen zugeordneten zweiten Fluidkanäle in der Rotoranordnung voneinander getrennt sind und sich in der gleichen axialen Richtung erstrecken. Hier führen also die zweiten Fluidkanäle in die gleiche Richtung bzw. zum gleichen axialen Ende der Rotoranordnung. Die ist beispielsweise dann von besonderem Vorteil, wenn eine mit Fluid zu speisende Baugruppe zur Beeinflussung von deren Wirkcharakteristik mit Fluid zu speisen ist und darüber hinaus in dieser Baugruppe eine Schaltanordnung, wie z.B. ein schaltbares Ventil, vorhanden ist, welches den Volumenstrom des die Wirkcharakteristik beeinflussenden Fluids schalten kann und dazu auch mit Druckfluid anzusteuern ist.

Die vorliegende Erfindung betrifft ferner einen Antriebsstrang für ein Fahrzeug, der wenigstens eine zur Drehmomentübertragung um eine Drehachse rotierende und mit Fluid zu speisende Baugruppe umfasst, welche über eine erfindungsgemäß aufgebaute Drehdurchführung mit Fluid zu speisen ist.

Wie vorangehend bereits dargelegt, kann auch vorgesehen sein, dass zwei mit Fluid zu speisende Baugruppen in axialem Abstand zueinander vorgesehen sind und dass die beiden Baugruppen über die selbe Drehdurchführung mit Fluid zu speisen sind.

Wenigstens eine Baugruppe kann eine Torsionsschwingungsdämpferanordnung umfassen. Auch ist es möglich, dass wenigstens eine Baugruppe eine Reibungskupplung, wie z.B. Doppelkupplung, umfasst, wobei im Sinne der vorliegenden Erfindung mit Reibungskupplung selbstverständlich auch eine Überbrückungskupplung in einem hydrodynamischen Drehmomentwandler oder einer hydrodynamischen Kupplung angesprochen ist. Auch als hydrodynamischer Drehmomentwandler kann wenigstens eine Baugruppe ausgebildet sein.

Um in einem derartigen Antriebsstrang durch die Funktionenverschmelzung in verschiedenen Systembereichen den Aufbau weiter zu vereinfachen, wird vorgeschlagen, dass die Rotoranordnung der Drehdurchführung mit wenigstens einer Baugruppe Drehmoment übertragend gekoppelt ist.

Die vorliegende Erfindung wird nachfolgend mit Bezug auf die beiliegenden Zeichnungen detailliert beschrieben. Es zeigt:
- Fig. 1: in prinzipartiger Darstellung einen Teil eines in einem Kraftfahrzeug vorzusehenden Antriebsstrangs;
- Fig. 2: eine Teil-Längsschnittansicht einer erfindungsgemäß aufgebauten Drehdurchführung;
- Fig. 3: eine der Fig. 2 entsprechende Ansicht einer alternativen Ausgestaltungsform einer Drehdurchführung;
- Fig. 4: eine der Fig. 2 entsprechende Ansicht einer alternativen Ausgestaltungsform einer Drehdurchführung;
- Fig. 5: eine weitere alternativ ausgestaltete Drehdurchführung in einem Antriebsstrang;
- Fig. 6: eine weitere alternative Ausgestaltung einer Drehdurchführung in einem Antriebsstrang.

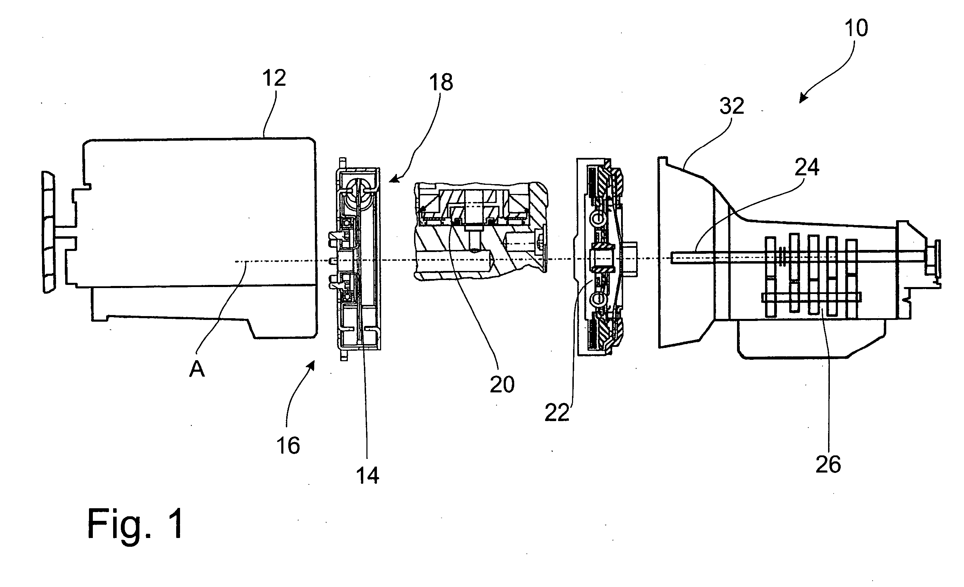

In Fig. 1 ist ein beispielsweise in einem Kraftfahrzeug, wie z.B. Personenkraftwagen oder Lastkraftwagen, einzusetzender Antriebsstrang 10 teilweise dargestellt. Der Antriebsstrang 10 weist ein beispielsweise als Brennkraftmaschine ausgebildetes Antriebsaggregat 12 auf, das über eine um eine Drehachse A rotierende Antriebswelle, beispielsweise Kurbelwelle, ein Drehmoment zu einer Torsionsschwingungsdämpferanordnung 14 ausgibt. Diese Torsionsschwingungsdämpferanordnung kann beispielsweise so aufgebaut sein, wie in der nachveröffentlichten deutschen Patentanmeldung 10 2005 058 531 beschrieben und offenbart. Der Inhalt dieser älteren Anmeldung wird hiermit durch Bezugnahme zum Inhalt der vorliegenden Anmeldung aufgenommen. Die Torsionsschwingungsdämpferanordnung 14 kann also eine zwischen einer Primärseite 16, welche mit dem Antriebsaggregat 12 gekoppelt ist, und einer Sekundärseite 18 wirksame Dämpfereinheit umfassen, die nach Art einer Gasdruckfeder aufgebaut ist. Die Wirkcharakteristik bzw. Kennlinie dieser Dämpfereinheit kann durch Druckfluidbeaufschlagung verstellt werden, wobei das hierfür erforderliche Druckfluid über eine nachfolgend noch detaillierter erläuterte Drehdurchführung 20 zugeführt bzw. abgeleitet wird. Im Drehmomentenfluss folgend auf die Sekundärseite 18 der Torsionsschwingungsdämpferanordnung 14 bzw. die Drehdurchführung 20 liegt eine Reibungskupplung 22, die von herkömmlichem Aufbau sein kann. Die Reibungskupplung 22 gibt das Drehmoment in eine Getriebeeingangswelle 24 eines Getriebes 26 ab. Alternativ zur Reibungskupplung kann ein hydrodynamischer Drehmomentwandler oder eine Doppelkupplung verbaut sein, wobei die letztgenannte trocken- oder nasslaufend ausgebildet sein kann.

Es sei hier darauf hingewiesen, dass die verschiedenen Systembereiche des vorangehend erläuterten Antriebsstrangs 10 nur beispielhaft und zum Erklären der allgemeinen Prinzipien dargestellt sind. Es ist selbstverständlich, dass hier verschiedenste Variationen vorgesehen sein können.

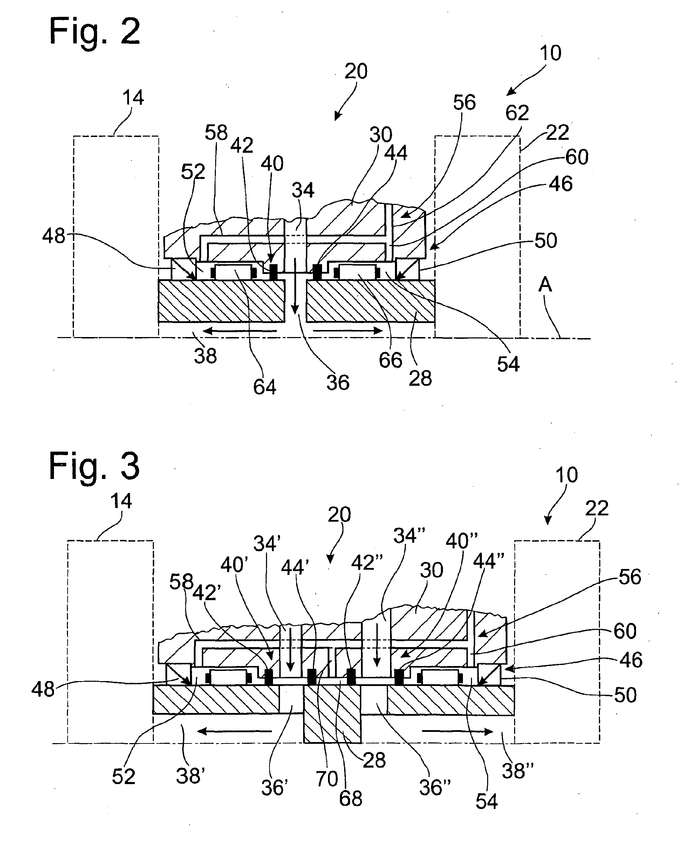

In Fig. 2 ist eine derartige Drehdurchführung 20 im Detail gezeigt. Diese Drehdurchführung 20 liegt im Antriebsstrang 10 zwischen der nur symbolhaft dargestellten Torsionsschwingungsdämpferanordnung 14 und der ebenfalls nur symbolhaft dargestellten Reibungskupplung 22. Die Drehdurchführung 20 umfasst eine hier als Wellenabschnitt ausgebildete Rotoranordnung 28. Diese Rotoranordnung 28 ist einerseits mit der Sekundärseite der Torsionsschwingungsdämpferanordnung 14 beispielsweise durch Verschraubung fest verbunden, und ist andererseits mit dem Eingangsbereich der Reibungskupplung 22, beispielsweise einem Schwungrad, fest verbunden. Somit übernimmt bei dieser Ausgestaltung einer Drehdurchführung 20 die Rotoranordnung 28 auch eine Drehmoment übertragende Funktion zwischen den beiden Baugruppen 14, 22 des Antriebsstrangs 10 und ist selbstverständlich mit diesen um die Drehachse A drehbar.

Die Rotoranordnung 28 radial außen umgebend ist eine Statoranordnung 30 vorgesehen. Diese Statoranordnung ist an einer feststehenden Baugruppe, beispielsweise der in Fig. 1 erkennbaren Getriebeglocke 32, festgelegt und somit nicht um die Drehachse A drehbar.

Die Statoranordnung 30 umfasst einen ersten Fluidkanal 34, der in einem radial äußeren Endbereich beispielsweise über eine Leitungsverbindung mit einer Druckfluidquelle verbunden ist bzw. verbunden werden kann, und der in seinem radial inneren Endbereich in Richtung zur Rotoranordnung 28 hin offen ist. Es sei hier darauf hingewiesen, dass selbstverständlich der erste Fluidkanal 34 eine Mehrzahl von in Umfangsrichtung um die Drehachse A in Abstand angeordneten und nach radial innen führenden Kanalabschnitten umfassen kann, um auf diese Art und Weise den Gesamtströmungsquerschnitt des ersten Fluidkanals 34 vergrößern zu können.

In Zuordnung zu diesem ersten Fluidkanal 34 der Statoranordnung 30 ist in der Rotoranordnung 28 ein zweiter Fluidkanal 36 vorgesehen. Dieser liegt näherungsweise im gleichen axialen Bereich, wie der erste Fluidkanal 34, und ist zum Außenumfangsbereich der Rotoranordnung 28 offen. Auch hier sei darauf hingewiesen, dass der zweite Fluidkanal 36 in der Rotoranordnung 28 eine Mehrzahl von in Umfangsrichtung um die Drehachse A verteilten und näherungsweise radial sich erstreckenden Kanalabschnitten umfassen kann, so dass hier ebenfalls ein vergleichsweise großer Strömungsquerschnitt bereitgestellt werden kann. Der erste Fluidkanal 36 endet mit einer zentralen Öffnung 38 in der Rotoranordnung 28, die im dargestellten Beispiel zu den beiden axialen Endbereichen der Rotoranordnung 28 hin offen ist, so dass über den zweiten Fluidkanal 36 eingeleitetes Druckfluid sowohl in Richtung zur Torsionsschwingungsdämpferanordnung 14, als auch in Richtung zur Reibungskupplung 22 geleitet werden kann.

Um die beiden einander zugeordneten Fluidkanäle 34 und 36 gegen den ungewünschten Austritt von Fluid abzudichten, ist eine erste Dichtungsanordnung 40 vorgesehen. Diese umfasst in axialer Richtung beidseits der einander zugeordneten Fluidkanäle 34, 36 jeweils ein erstes Dichtungselement 42, 44, die sowohl an der Statoranordnung 30, als auch an der Rotoranordnung 28 dichtend anliegen. Diese beiden ersten Dichtungselemente 42, 44 der ersten Dichtungsanordnung 40 sind als Druckdichtungen ausgebildet, dienen also dazu, auch bei vergleichsweise hohem Druck die bezüglich einander rotierenden Baugruppen Statoranordnung 30 und Rotoranordnung 28 im Wesentlichen fluiddicht gegeneinander abzudichten.

Eine zweite Dichtungsanordnung 46 umfasst an den von den Fluidkanälen 34, 36 abgewandten axialen Seiten der ersten Dichtungselemente 42, 44 der ersten Dichtungsanordnung 40 jeweils ein zweites Dichtungselement 48, 50. Diese liegen hier beispielsweise nahe den axialen Enden sowohl der Rotoranordnung 28, als auch der Statoranordnung 30, so dass zwischen jeweils einem Paar von axial zueinander versetzt liegenden und näherungsweise auf gleichem radialen Niveau liegenden Dichtungselementen 42 und 48 bzw. 44 und 50 ein Raumbereich 52, 54 gebildet ist.

Eine Leckagekanalanordnung 56 in der Statoranordnung 30 umfasst jeweils einen Leckagekanal 58 bzw. 60, der vom jeweiligen Raumbereich 52 bzw. 54 wegführt und über eine Sammelleitung 62 beispielsweise zu einem Fluidreservoir führt. Durch das Bereitstellen dieser Leckagekanalanordnung 56 ist sichergestellt, dass Druckfluid, das über die ersten Dichtungselemente 42, 44 der ersten Dichtungsanordnung 40 hinweggeströmt ist, nicht zu einem übermäßigen Druckaufbau in dem Raumbereichen 52, 54 führen kann, sondern über die im Wesentlichen drucklose Leckagekanalanordnung 56 abgeleitet wird. Die zweiten Dichtungselemente 48, 50 der zweiten Dichtungsanordnung 46 können somit im Wesentlichen als Volumenstromdichtung ausgebildet sein und müssen nicht mehr gegen die im Bereich der Fluidkanäle 34, 36 vorherrschenden hohen Drücke abdichten. Auf diese Art und Weise kann ein Fluidaustritt aus der Drehdurchführung 20 vollständig unterbunden werden. Das über die Leckagekanalanordnung 56 abströmende Fluid kann in den Arbeistkreislauf zurückgespeist werden.

Um die Rotoranordnung 28 bezüglich der Statoranordnung 30 in definierter Positionierung abstützen zu können und somit dafür sorgen zu können, dass die beiden Dichtungsanordnungen 40 und 46 ihre Funktionalität zuverlässig erfüllen können, ist in jedem der Raumbereiche 52, 54, jeder gebildet jeweils zwischen einem Paar von Dichtungselementen 42, 48 bzw. 44, 50, ein Lager 64, 66 angeordnet. Diese als Wälzkörperlager oder Gleitlager ausgebildeten Lager 64, 66 sorgen für eine definierte Radialpositionierung der Rotoranordnung 28 bezüglich der Statoranordnung 30 und erfahren gleichzeitig durch den vor allem bei höheren Drücken zwangsweise vorhandenen Leckagestrom in die Raumbereiche 52, 54 eine Schmierung durch das eingesetzte Fluid, also beispielsweise Öl oder dergleichen. Es sei dabei darauf hingewiesen, dass, wie in Fig. 2 angedeutet, durch entsprechend gestufte Ausgestaltung der Statoranordnung 30 und ggf. auch der Rotoranordnung 28 diese Lager 64, 66 gleichzeitig auch die Funktionalität der definierten axialen Positionierung dieser beiden Bauteile bezüglich einander übernehmen können.

Mit der in Fig. 2 erkennbaren Drehdurchführung 20 wird es möglich, in einfacher und zuverlässiger, vor allem fluiddichter Art und Weise eine bzw. mehrere mit Druckfluid zu speisende Baugruppen 14 bzw. 22 eines Antriebsstrangs 10 zu speisen. Auf diese Art und Weise wird es möglich, beispielsweise die Dämpfungscharakteristik einer Torsionsschwingungsdämpferanordnung 14 an verschiedene Betriebszustände des Antriebsstrangs 10 angepasst zu variieren bzw. eine Reibungskupplung 22, die beispielsweise auch als nasslaufende Reibungskupplung ausgebildet sein kann, zur Durchführung von Einkuppelvorgängen bzw. Auskuppelvorgängen anzusteuern. Insbesondere bei der in Fig. 2 gezeigten Ausgestaltungsform kann durch die gleichzeitige Fluidzufuhr bzw. Fluiddruckerhöhung für beide Baugruppen 14 und 22 eine aufeinander abgestimmte Variation bzw. Ansteuerung in einfacher Art und Weise erfolgen.

Eine alternative Ausgestaltungsform ist in Fig. 3 gezeigt. Im Folgenden wird lediglich auf die im Vergleich zur Fig. 1 vorhandenen Unterschiede eingegangen.

Man erkennt in Fig. 3, dass in der Statoranordnung 30 in axialem Abstand zueinander zwei erste Fluidkanäle 34' und 34" vorhanden sind. In Zuordnung dazu sind in der Rotoranordnung 28 näherungsweise an gleicher axialer Positionierung wie die jeweiligen ersten Fluidkanäle 34', 34" zweite Fluidkanäle 36' und 36" vorhanden. In Zuordnung zu jeder Paarung aus erstem Fluidkanal 34', 34" und zweitem Fluidkanal 36' bzw. 34" und 36" ist eine jeweilige erste Dichtungsanordnung 40' mit Dichtungselementen 42' und 44' bzw. 40" mit ersten Dichtungselementen 42" und 44" vorgesehen. Somit kann jede der Fluidkanalpaarungen 34', 36' und 34", 36" voneinander getrennt und mit unterschiedlichen Drücken arbeiten. Hierzu trägt vor allem auch bei, dass die beiden zweiten Fluidkanäle 36' und 36" in die Rotoranordnung 28 voneinander getrennt sind bzw. zu voneinander nicht in Verbindung stehenden zentralen Öffnungen 38', 38" führen, die selbstverständlich auch als Teilbereich der zweiten Fluidkanäle 36' bzw. 36" interpretiert werden können. D.h., bei dieser Ausgestaltungsform führen die beiden zweiten Fluidkanäle 36' und 36" ausgehend vom Ort der Einspeisung in die Rotoranordnung 28 in entgegengesetzten axialen Richtungen. Einer der zweiten Fluidkanäle, nämlich der zweite Fluidkanal 36' mit der zentralen Öffnung 38', dient also zur Speisung der Torsionsschwingungsdämpferanordnung 14. Der andere zweite Fluidkanal 36" mit der zentralen Öffnung 38" dient zur Speisung der Reibungskupplung 22. Somit können die beiden Baugruppen 14 und 22 voneinander unabhängig und auch mit unterschiedlichen Fluiddrücken bzw. Fluidvolumenströmen gespeist bzw. angesteuert werden.

Die Unabhängigkeit der Ansteuerung der beiden Druckfluid führenden Volumenbereiche kann weiterhin dadurch noch verbessert werden, dass ein zwischen den beiden ersten Dichtungselementen 44' und 42" der beiden ersten Dichtungsanordnungen 40' und 40" gebildeter Zwischenraum 68 über einen Leckagekanal 70 der Leckagekanalanordnung 56 entleert werden kann.

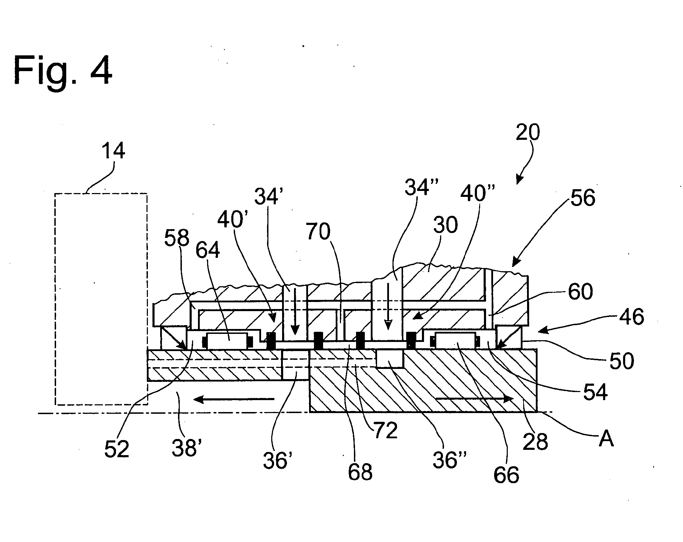

Eine weitere Variation ist in Fig. 4 gezeigt. Man erkennt auch hier wieder die beiden ersten Fluidkanäle 34', 34" in der Statoranordnung 30 und diesen zugeordnet jeweils einen zweiten Fluidkanal 36', 36". Der zweite Fluidkanal 36" führt mit der zentralen Öffnung 38 zur Torsionsschwingungsdämpferanordnung 14. Auch der zweite Fluidkanal 36" führt über eine oder mehrere axiale und bezüglich der Drehachse A nach radial außen versetzte Öffnungen 72 zur Torsionsschwingungsdämpferanordnung 14. Hier kann also der Torsionsschwingungsdämpferanordnung 14 mit zwei verschiedenen Volumenströmen bzw. Fluiddrücken beaufschlagt werden. Beispielsweise kann über die Fluidkanäle 34" und 36" ein schaltbares Ventil innerhalb der Torsionsschwingungsdämpferanordnung 14 angesteuert werden, welches Ventil wiederum innerhalb der Torsionsschwingungsdämpferanordnung 14 dann den Volumenstrom des über die Fluidkanäle 34', 36' zugeleiteten Druckfluids freigibt bzw. zumindest teilweise blockiert, um auf diese Art und Weise dann die Beeinflussung der Dämpfungscharakteristik vorzunehmen. Die Fluidkanäle 34" und 36" stellen hier also im Wesentlichen eine Steuerkanalanordnung bereit, während die Fluidkanäle 34' und 36' im Wesentlichen eine Arbeitsdruckkanalanordnung bereitstellen.

Es ist selbstverständlich, dass die vorangehend beschriebenen konstruktiven Ausführungen nur beispielhaft sind und dazu dienen, die Prinzipien einer erfindungsgemäß aufgebauten Drehdurchführung 20 zu erläutern. So müssen nicht notwendigerweise die beispielsweise in der Rotoranordnung vorhandenen Öffnungen oder Bohrungen sich exakt radial oder exakt axial erstrecken. Auch zueinander unter anderem Winkel geneigte Anordnungen sind möglich, um beispielsweise die durch Strömungsumlenkung entstehenden Drosseleffekte mindern zu können. Die Dichtunganordnungen 40 bzw. 46 können mit ihren Dichtungselementen 42, 44 bzw. 48, 50 in verschiedener Form ausgebildet sein. So können beispielsweise die Dichtungselemente 42, 44 der ersten Dichtungsanordnung 40 als offene Dichtringe mit T-Schloss ausgebildet sein. Auch andere Schlossgeometrien oder geschlossene Dichtringe sind möglich. Die Dichtelemente 48, 50 der zweiten Dichtungsanordnung 46 können beispielsweise als Radialwellendichtringe ausgebildet sein. Weiterhin ist es selbstverständlich möglich, dass die Rotoranordnung 28 zwar die Funktionalität der Fluidkommunikation mit der zu speisenden Baugruppe, also der Torsionsschwingungsdämpferanordnung 14 oder/und der Reibungskupplung 22 übernimmt, nicht jedoch die Funktionalität der Drehmomentkopplung. Dies könnte beispielsweise über eine separate Welle oder einen Wellenabschnitt erfolgen, welchen die dann als Hohlwellenabschnitt ausgebildete Rotoranordnung dann radial außen umgibt. In diesem Falle wäre selbstverständlich die in den Figuren mit 38 bzw. 38" bezeichnete Öffnung keine zentrale Öffnung sondern, ähnlich wie die Öffnung 72 in der Ausgestaltungsform der Fig. 4 als im Volumenbereich der Rotoranordnung 28 liegende Öffnung ausgebildet.

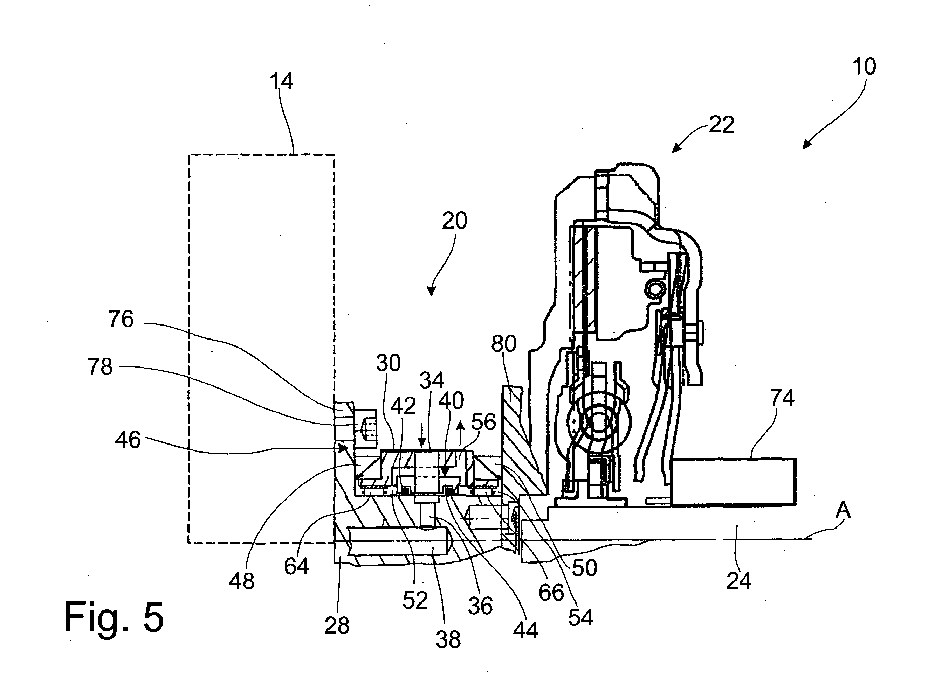

Eine weitere Ausgestaltungsform einer erfindungsgemäß aufgebauten Drehdurchführung 20 ist in Fig. 5 gezeigt. Dabei entspricht die in Fig. 5 gezeigte Ausgestaltung der Drehdurchführung 20 dem bereits auch in Fig. 1 dargestellten konstruktiven Aufbau. Die Drehdurchführung 20 liegt hier also zwischen der Torsionsschwingungsdämpferanordnung 14 und der Reibungskupplung 22, die hier als herkömmliche über ein Betätigungssystem 74 zu beaufschlagende gedrückte Kupplung ausgebildet ist.

Man erkennt in Fig. 5, dass die zweiten Dichtungselemente 48, 50 der zweiten Dichtungsanordnung 46 radial außerhalb der ersten Dichtungselemente 42, 44 der ersten Dichtungsanordnung 40 positioniert sind, und zwar derart, dass sie auch die Lager 64, 66 radial außen umgeben. Dabei dichtet das zweite Dichtungselement 48 zwischen der Statoranordnung 30 und einem nach radial außen greifenden Flanschbereich 76 der Rotoranordnung 28 ab, über welchen gleichzeitig auch durch Schraubbolzen 78 die Festlegung der Rotoranordnung 28 bezüglich der Torsionsschwingungsdämpferanordnung 14 erfolgt. An der anderen axialen Seite dichtet das zweite Dichtungselement 50 zwischen der Rotoranordnung 30 und einem Schwungmasseteil 80 der Eingangsseite der Reibungskupplung 22 ab, das wiederum über mehrere Schraubbolzen an der Rotoranordnung 28 festgelegt ist.

Durch diese radiale Staffelung der Dichtungselemente 48, 50 bezüglich der Lager 64, 66 wird unter gleichzeitiger Beibehaltung der Raumbereiche 52, 54 zwischen den jeweiligen Dichtungselementen 48, 42 bzw. 44, 50 eine axial sehr kurz bauende Ausgestaltungsform geschaffen.

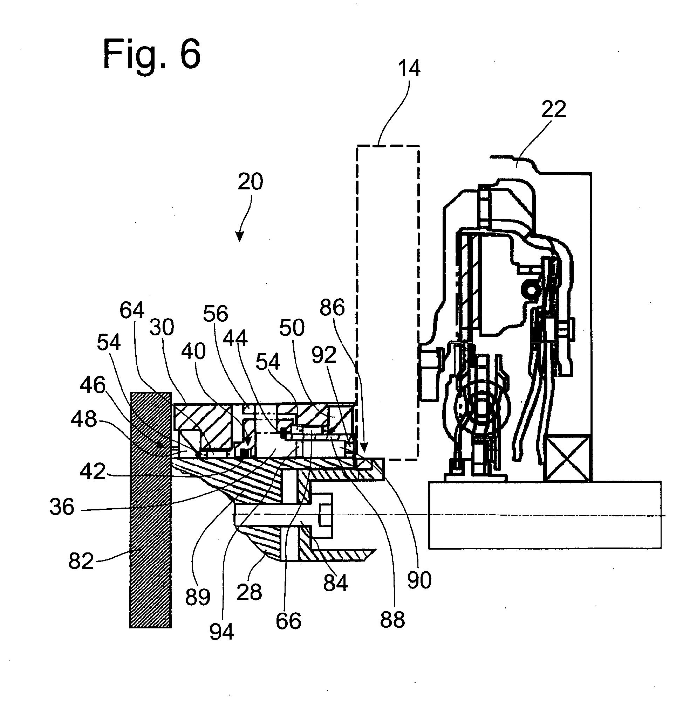

Eine weitere alternative Ausgestaltungsform, bei welcher die Drehdurchführung 20 zwischen einer Antriebswelle 82, also beispielsweise einer Kurbelwelle, und einer Torsionsschwingungsdämpferanordnung 14, welche hier der Reibungskupplung 22 vorgeschaltet ist, angeordnet ist, ist in Fig. 6 gezeigt. Man erkennt, dass die Rotoranordnung 28 einen axialen Fortsatz der Kurbelwelle 82 bildet oder mit dieser fest verschraubt ist. Über eine zentrale Schraube 84 ist die Primärseite der Torsionsschwingungsdämpferanordnung 14 unter Bildung beispielsweise eines Formschlusseingriffs vermittels Verzahnungen 84 an die Rotoranordnung 28 fest angekoppelt. Weiterhin umfasst die Rotoranordnung 28 eine Hülse 88, die den der Torsionsschwingungsdämpferanordnung 14 nahe liegenden Endbereich des zentralen Bereichs 89 derselben umgibt. Zwischen der Hülse 88 und dem Bereich 28 ist ein ringartiger Kanal 90 gebildet, welcher einen wesentlichen Teil des zweiten Fluidkanals 36 bereitstellt. Die Hülse 88 ist dabei in ihrem der Torsionsschwingungsdämpferanordnung 14 nahe liegenden axialen Endbereich mit L-förmigem Schnitt ausgebildet und liegt somit am Außenumfang des zentralen Bereichs 89 der Rotoranordnung 28 dicht an. Mehrere Öffnungen 92 ermöglichen einen Fluiddurchtrift in Richtung Torsionsschwingungsdämpferanordnung 14. Der andere axiale Endbereich der Hülse 88 ist über einen ebenfalls mit Durchtrittsöffnung versehenen Stützring 94 nach radial innen abgestützt.

An der Stirnfläche der Hülse 88 greift das erste Dichtungselement 44 der ersten Dichtungsanordnung 40 an und stellt somit eine Druckabdichtung an dieser axialen Seite bezüglich der Statoranordnung 30 bereit. An dem der Torsionsschwingungsdämpferanordnung 14 nahe liegenden Ende ist die Statoranordnung 30 über das Dichtelement 50 der zweiten Dichtungsanordnung 46 bezüglich der Rotoranordnung 28 abgedichtet. Zwischen den beiden Dichtungselementen 44, 50 liegt wiederum das Lager 66, das nunmehr nach radial innen hin zur Rotoranordnung 28 über die Hülse 88 abgestützt ist. Der Raumbereich 54 ist hier also zwischen der Hülse 88 und der diese radial außen übergreifenden Statoranordnung 30 gebildet. Das Lager 64 liegt wieder unmittelbar zwischen der Statoranordnung 30 und dem zentralen Bereich 89 der Rotoranordnung 28, ebenso wie das zweite Dichtungselement 48 der zweiten Dichtungsanordnung 46.

Ebenso wie bei den vorangehend beschriebenen Ausgestaltungsformen ist auch hier eine Leckagekanalanordnung 56 mit zu den jeweiligen Raumbereichen 52 bzw. 54 führenden Leckagekanälen vorhanden, um Fluid, das die Dichtungsanordnung 40 überwunden hat, aus diesen Raumbereichen abzuziehen.

## Patentansprüche

1. Drehdurchführung, insbesondere für den Antriebsstrang eines Fahrzeugs, umfassend:
- eine mit einer mit Fluid zu speisenden Baugruppe (14, 22) zur gemeinsamen Drehung um eine Drehachse (A) zu verbindende Rotoranordnung (28),
- eine die Rotoranordnung (28) umgebende und gegen Drehung um die Drehachse (A) festzulegende Statoranordnung (30),
- in der Statoranordnung (30) wenigstens einen ersten Fluidkanal (34; 34', 34"),
- in der Rotoranordnung (28) in Zuordnung zu jedem ersten Fluidkanal (34; 34', 34") wenigstens einen zweiten Fluidkanal (36; 36', 36"),
- eine erste Dichtungsanordnung (40; 40', 40"), die an beiden Seiten bezüglich des wenigstens einen ersten Fluidkanals (34; 34', 34") und des diesem zugeordneten wenigstens einen zweiten Fluidkanals (36; 36', 36") jeweils ein erstes Dichtungselement (42, 44; 42', 44', 42", 44") umfasst, das an der Rotoranordnung (28) und an der Statoranordnung (30) dichtend anliegt,
- eine zweite Dichtungsanordnung (46), die an den von dem wenigstens einen ersten Fluidkanal (34; 34', 34") und dem diesem zugeordneten wenigstens einen zweiten Fluidkanal (36; 36', 36")abgewandten Seiten der ersten Dichtungselemente (42, 44; 42', 44', 42", 44") jeweils ein zweites Dichtungselement (48, 50) umfasst, das an der Rotoranordnung (28) und an der Statoranordnung (30) dichtend anliegt,
- eine Leckagekanalanordnung (56), die in der Statoranordnung (30) oder/und der Rotoranordnung (28) aus den jeweils zwischen einem ersten Dichtungselement (42, 44; 42', 44', 42", 44") und einem zweiten Dichtungselement (48, 50) gebildeten Raumbereichen (52, 54) wegführende Leckagekanäle (58, 60) umfasst.

2. Drehdurchführung nach Anspruch 1,
**dadurch gekennzeichnet, dass** bei wenigstens einem Paar aus erstem Dichtungselement (42, 44; 42', 44', 42", 44") und zweitem Dichtungselement (48, 50) die beiden Dichtungselemente axial in Abstand zueinander angeordnet sind.

3. Drehdurchführung nach Anspruch 1 oder 2,
**dadurch gekennzeichnet, dass** bei wenigstens einem Paar aus erstem Dichtungselement (42, 44; 42', 44', 42", 44") und zweitem Dichtungselement (48, 50) die beiden Dichtungselemente auf näherungsweise gleichem radialen Niveau liegen.

4. Drehdurchführung nach einem der Ansprüche 1 bis 3,
**dadurch gekennzeichnet, dass** bei wenigstens einem Paar aus erstem Dichtungselement (42, 44; 42', 44', 42", 44") und zweitem Dichtungselement (48, 50) die beiden Dichtungselemente auf unterschiedlichem radialen Niveau liegen.

5. Drehdurchführung nach einem der Ansprüche 1 bis 4,
**dadurch gekennzeichnet, dass** in wenigstens einem Raumbereich (52, 54) zwischen zwei Dichtungselementen eines Paares aus erstem Dichtungselement (42, 44; 42', 44' 42", 44") und zweitem Dichtungselement (48, 50) ein die Rotoranordnung (28) bezüglich der Statoranordnung (30) abstützendes Lager (64, 66) angeordnet ist.

6. Drehdurchführung nach Anspruch 4 und Anspruch 5,
**dadurch gekennzeichnet, dass** das radial weiter außen liegende der Dichtungselemente (48, 50) das in dem Raumbereich (52, 54) zwischen den beiden Dichtungselementen (44, 50) angeordnete Lager (64, 66) radial außen umgibt.

7. Drehdurchführung nach einem der Ansprüche 1 bis 6,
**dadurch gekennzeichnet, dass** in der Statoranordnung (30) wenigstens zwei erste Fluidkanäle (34', 34") vorgesehen sind.

8. Drehdurchführung nach Anspruch 7,
**dadurch gekennzeichnet, dass** jedem ersten Fluidkanal (34', 34") und dem diesem zugeordneten wenigstens einen zweiten Fluidkanal (36', 36") in der Rotoranordnung (28) eine erste Dichtungsanordnung (30) zugeordnet ist, und dass zwischen zwei ersten Dichtungselementen (44', 42") von verschiedenen ersten Fluidkanälen (34') zugeordneten ersten Dichtungsanordnungen (40', 40") ein Zwischenraum (68) gebildet ist und die Leckagekanalanordnung (56) einen aus diesem Zwischenraum (68) wegführenden Leckagekanal (70) umfasst.

9. Drehdurchführung nach Anspruch 7 oder 8,
**dadurch gekennzeichnet, dass** die verschiedenen ersten Fluidkanälen (34', 34") zugeordneten zweiten Fluidkanäle (36', 36') in der Rotoranordnung (28) voneinander getrennt sind und sich in entgegengesetzten axialen Richtungen erstrecken.

10. Drehdurchführung nach Anspruch 7 oder 8,
**dadurch gekennzeichnet, dass** die verschiedenen ersten Fluidkanälen (34', 34") zugeordneten zweiten Fluidkanäle (36', 36") in der Rotoranordnung (28) voneinander getrennt sind und sich in der gleichen axialen Richtung erstrecken.

11. Antriebsstrang für ein Fahrzeug, umfassend wenigstens eine zur Drehmomentübertragung um eine Drehachse (A) rotierende und mit Fluid zu speisende Baugruppe (14, 22) und eine Drehdurchführung (20) nach einem der vorangehenden Ansprüche, über welche die wenigstens eine Baugruppe (14, 22) mit Fluid zu speisen ist.

12. Antriebsstrang nach Anspruch 11,
**dadurch gekennzeichnet, dass** zwei mit Fluid zu speisende Baugruppen (14, 22) in axialem Abstand zueinander vorgesehen sind und dass die beiden Baugruppen (14, 22) über die selbe Drehdurchführung (20) mit Fluid zu speisen sind.

13. Antriebsstrang nach Anspruch 11 oder 12,
**dadurch gekennzeichnet, dass** wenigstens eine Baugruppe (14) eine Torsionsschwingungsdämpferanordnung (14) umfasst.

14. Antriebsstrang nach Anspruch 11, 12 oder 13,
**dadurch gekennzeichnet, dass** wenigstens eine Baugruppe (22) eine Reibungskupplung (22), einen hydrodynamischen Drehmomentwandler oder eine Doppelkupplung umfasst.

15. Antriebsstrang nach einem der Ansprüche 11 bis 14,
**dadurch gekennzeichnet, dass** die Rotoranordnung (28) der Drehdurchführung (20) mit wenigstens einer Baugruppe (14, 22) Drehmoment übertragend gekoppelt ist.
